# EUROPÄISCHE PATENTANMELDUNG

(11) **EP 1 914 388 A1**
(43) Veröffentlichungstag der Anmeldung: **23.04.2008**
(21) Anmeldenummer: 06022060.5
(22) Anmeldetag: 20.10.2006
(51) Int. Cl.: F01D 11/00, F01D 11/02, F16J 15/32

(54) **Dichtelement zur Abdichtung eines Leckagespalts zwischen einem Rotor und einem Stator einer thermischen Strömungsmaschine.**

(71) Anmelder: SIEMENS AKTIENGESELLSCHAFT, 80333 München (DE)
(72) Erfinder: Buchal, Tobias, Dr., 40489 Düsseldorf (DE); Costamagna, Raoul, Dr., 45479 Mülheim an der Ruhr (DE); Kocdemir, Bora, Dr., 45357 Essen (DE); Paul, Uwe, Dr., 40882 Ratingen (DE); Pickert, Ursula, 45470 Mülheim an der Ruhr (DE); Schettel, Joachim, Dr., 47228 Duisburg (DE); Teteruk, Rostislav, Dr., 45468 Mülheim an der Ruhr (DE); Vosberg, Volker, Dr., 45476 Mülheim an der Ruhr (DE)

(57) **Zusammenfassung**

Ein Dichtelement (34) zur Abdichtung eines von einem Strömungsmedium durchströmbaren Leckagespalts (26, 27, 28, 29) zwischen einem Rotor (22) und einem Stator (21) einer thermischen Strömungsmaschine soll in jedem Betriebszustand der Strömungsmaschine den Leckagespalt (26, 27, 28, 29) effektiv abdichten. Dazu ist erfindungsgemäß das Dichtelement (34) mit einem Biegekörper (42) versehen, welcher in Abhängigkeit seiner Temperatur seine Form verändert.

## Beschreibung

Die Erfindung betrifft ein Dichtelement zur Abdichtung eines von einem Strömungsmedium durchströmbaren Leckagespalts zwischen einem Rotor und einem Stator einer thermischen Strömungsmaschine. Die Erfindung betrifft weiterhin eine thermische Strömungsmaschine, insbesondere eine Gasturbine oder Dampfturbine, welche mit einem solchen Dichtelement versehen ist.

Thermische Strömungsmaschinen wie Dampf- oder Gasturbinen weisen üblicherweise einen in einem feststehenden Gehäuse drehbar gelagerten Rotor auf. Die feststehende Maschinenbaugruppe einer thermischen Strömungsmaschine wird auch als Stator bezeichnet. Zwischen dem Rotor und dem Stator verläuft in axialer Richtung ein Strömungskanal, in den eine Anzahl von zu Schaufelgruppen oder Schaufelreihen zusammengefasste Laufschaufeln hineinragen. Die kinetische Energie des durch den Strömungskanal strömenden Arbeitsmediums wird durch Impulsübertragung über die Laufschaufeln auf die Rotorwelle übertragen. Die somit erzeugte Rotationsenergie kann z. B. zum Antrieb eines elektrischen Generators genutzt werden.

Bei einer Gasturbine ist üblicherweise der Turbineneinheit eine Verdichtereinheit vorgeschaltet. Dabei sind die Laufschaufeln der Turbineneinheit und der Verdichtereinheit vorzugsweise auf einer gemeinsamen Rotorwelle angeordnet. Der Verdichter saugt kalte Umgebungsluft an, verdichtet sie und führt sie dann einer Brennkammer zu, in der sie mit einem Brennstoff zuerst vermischt und dann verbrannt wird. Die dabei entstehenden Gase strömen mit hoher Geschwindigkeit in den Strömungskanal der Turbineneinheit und treiben deren Rotor an. Die auf diese Weise erzeugte mechanische Energie wird zum Teil wieder der thermischen Strömungsmaschine zugeführt und zum Antrieb des Verdichters genutzt.

Eine thermische Strömungsmaschine kann am Stator angebrachte, in den Strömungskanal hineinragende und den Laufschaufeln vorgeschaltete Leitschaufeln aufweisen. Die Leitschaufeln sind üblicherweise ebenfalls zu Schaufelreihen oder Schaufelgruppen zusammengefasst. Aufgabe der Leitschaufeln ist eine für den Betrieb der Turbine geeignete Strahlführung zwischen aufeinander folgenden Laufschaufelreihen. In der Regel sind die Leitschaufelreihen und die Laufschaufelreihen alternierend angeordnet. Eine aufeinander folgende Einheit von einer Leitschaufelreihe und einer Laufschaufelreihe wird bei einer Turbine auch als Turbinenstufe und bei einem Verdichter als Verdichterstufe bezeichnet.

Der Wirkungsgrad einer thermischen Strömungsmaschine wird unter anderem auch durch den zwischen dem Rotor und dem Stator gelegenen Spalt beeinflusst. Dieser möglichst klein zu haltende Spalt wird auch als Leckagespalt bezeichnet. Der im Leckagespalt strömende, vom vorgesehenen Strömungsweg abweichende Leckagestrom tritt beispielsweise zwischen der Rotorwelle und dem umliegenden Gehäuse und zwischen den Lauf- oder Leitschaufeln und dem Gehäuse bei der Turbine und dem Verdichter gleichermaßen auf. Um die dadurch hervorgerufenen Leistungsverluste möglichst gering zu halten, kommen geeignete Dichtungen zwischen den stationären und rotierenden Baugruppen der thermischen Strömungsmaschine zum Einsatz.

Eine bei Gas- oder Dampfturbinen häufig eingesetzte Dichtungsart ist die Labyrinthdichtung. Eine derartige Dichtung ist verhältnismäßig einfach aufgebaut und funktioniert zumindest im Prinzip ohne nennenswerten Verschleiß über lange Betriebszeiten. Dabei sind in der Art von Ringblenden in eine oder mehrere Komponenten des feststehenden und/oder des rotierenden Turbinenteils eingebaute und in den Leckagespalt hineinragende Dichtlippen oder Dichtringe angeordnet, deren Drosselwirkung eine Reduktion des Leckagestromes bewirkt. Durch die Hintereinanderschaltung mehrerer Profilblenden, gegebenenfalls durch eine gestufte oder verzahnte Ausführung der Labyrinthe, kann der Leckagestrom noch weiter herabgesetzt werden. Wegen der verhältnismäßig großen Radial- und Axialbewegungen der Welle und auch des Gehäuses sind aber dennoch vergleichsweise große Restspalte erforderlich, so dass der den Wirkungsgrad der Strömungsmaschine begrenzende Leckagestrom immer noch recht groß ist.

Um die Spalte so klein wie möglich zu halten, lässt man gelegentlich auch zu, dass die Dichtstreifen in einen verschleißfähigen Gegenring einschneiden. Dieser kann beispielsweise aus einer Nickel-Graphit-Legierung oder einer metallischen oder keramischen Wabenstruktur bestehen. Solche Konstruktionen funktionieren befriedigend, wenn zwischen dem Rotor und dem Stator zeitweilige thermische Dehnungsdifferenzen auftreten. Bei modernen Hochleistungs-Strömungsmaschinen gibt es jedoch außer den zeitlich unterschiedlich verlaufenden thermischen Ausdehnungen der Bauteile auch noch beträchtliche radiale Auslenkungen durch hohe radiale Beschleunigung des Rotors sowie schubbedingte Biegung des Gehäuses. Schneiden die Dichtstreifen dabei sehr tief in die Gegenringe ein, führt dies zu einer Verschlechterung des Dichtverhaltens. Außerdem bergen derartige Anstreifvorgänge immer wieder die Gefahr größerer Maschinenschäden, wenn sich z. B. größere Bruchstücke von den Dichtringen ablösen und mit hoher Geschwindigkeit gegen die Komponenten der nachfolgenden Turbinenstufen geschleudert werden oder infolge thermischer Verkrümmung.

Eine weitere alternative Dichtung ist die aus einem Borstenkranz bestehende Bürstendichtung. Eine derartige Dichtung kann aus einem oder mehreren Borstenpaketen zusammengesetzt sein, wobei die Borsten des jeweiligen Borstenpaketes direkt in einer den Leckagespalt oder Leckagekanal begrenzenden Rotorkomponente oder Statorkomponente verankert sind. Die an der jeweiligen Turbinenkomponente fixierten Borsten überbrücken die Distanz zwischen dem feststehenden und dem rotierenden Bauteil, wobei die Borsten mit ihrem freien Ende zumindest während des Betriebs der Strömungsmaschine an der gegenüber liegenden Turbinenkomponente schleifen können. Dadurch entsteht eine Dichtung mit nur geringen Leckageströmen. Aufgrund der Elastizität der Borsten ist bei relativ konstant bleibender Dichtheit eine Radialbewegung der beiden Komponenten gegeneinander bis zu einem gewissen Grad möglich. Eine bis zu 45° zur Rotationsrichtung geneigte Anordnung der Borsten reduziert dabei die Knickgefahr, verringert das Reibmoment und bewirkt, dass die Bürsten sich schließen wenn sie mit Druck beaufschlagt werden. Ein wesentlicher Vorteil der Borstendichtungen besteht außerdem in ihrem geringen Einbauraumbedarf. Dadurch kann eine Strömungsmaschine, insbesondere eine Gas- oder Dampfturbine, ausgesprochen kompakt ausgeführt werden, was den Materialbedarf verringert.

Jedoch weisen die Borstendichtungen den entscheidenden Nachteil auf, dass nur begrenzte radiale Relativbewegungen zwischen den Komponenten ausgeglichen werden können. Werden nämlich die Relativbewegungen zu groß, so besteht die Gefahr einer Beschädigung und eines nachfolgenden Verlustes an Dichtwirkung. Dieser ist signifikant, da bei Beschädigung der Borstendichtung die Dichtwirkung nahezu vollständig verloren gehen kann. Die frei beweglichen Abschnitte der Borsten lassen sich auch nicht beliebig lang ausführen. Im Hinblick auf die Druckbelastbarkeit der Borstendichtung und zur Vermeidung einer durch den Strömungsdruck des Strömungsmediums hervorgerufenen "Flatterneigung" der Borsten wird die Höhe des Spaltes zwischen der zur Aufnahme der Borsten vorgesehenen Metallfassung und der gegenüber liegenden Turbinenkomponente vielmehr so klein wie möglich aufgeführt. Ein Kontakt einer derartigen Fassung oder Aufnahme für die Borsten, die oftmals auch eine in den Leckageraum hineinragende Stützwand für die Borsten umfasst, mit der gegenüber liegenden Turbinenkomponente muss auf alle Fälle vermieden werden, um größere Beschädigungen der umliegenden Bauteile oder im Extremfall der gesamten Turbineneinheit zu verhindern. Wünschenswert wäre es, die oben genannten Probleme bei der Abdichtung des Leckagespalts zu vermeiden und ein Dichtungssystem anzugeben, welches bei allen Betriebszuständen der Strömungsmaschine bei hoher Lebensdauer eine gute Dichtheit gewährleistet. Die Dichtung sollte tolerant gegenüber Spaltbreitenänderungen sein, indem diese verschiedene Breiten abdecken kann.

Der Erfindung liegt daher die Aufgabe zugrunde, ein Dichtelement der eingangs genannten Art anzugeben, welches den Leckagespalt zwischen der Rotorkomponente und der Statorkomponente in jedem Betriebszustand der Strömungsmaschine effektiv abdichtet, wobei auch zeitweise auftretende relativ große Spalte zwischen den Komponenten ohne Dichtheitsverlust kompensiert werden sollen.

Diese Aufgabe wird erfindungsgemäß gelöst, indem das Dichtelement einen Biegekörper aufweist, der in Abhängigkeit von seiner Temperatur seine Form verändert.

Die Erfindung geht dabei von der Überlegung aus, dass die Leckagespaltänderung zwischen der Rotorkomponente und der Statorkomponente einer thermischen Strömungsmaschine, insbesondere einer Gas- und Dampfturbine, besonders effektiv durch ein temperatursensitives Dichtelement abgedichtet werden kann. Dies ist sinnvoll, da die radialen Relativbewegungen der Komponenten während verschiedener Betriebsphasen der Strömungsmaschine neben unterschiedlicher Fliehkraft- und schubbedingter Dehnungen und Verschiebungen schlussendlich von den thermischen Ausdehnungsvorgängen abhängig ist. Durch ein derartiges Dichtungskonzept würde der Wirkungsgrad, welcher mit kleiner werdender Leckageströmung ansteigt, im Regelbetrieb der Strömungsmaschine entscheidend verbessert werden. Es sollte daher angestrebt werden, ein temperaturgesteuertes Dichtelement einzusetzen, damit einerseits ein erforderliches großes Kaltspiel zwischen der Rotorkomponente und der Statorkomponente gewährleistet ist und andererseits der Leckagespalt im Regelbetrieb möglichst klein gehalten wird.

Es ist daher wünschenswert, ein Dichtungssystem einzusetzen, welches in Abhängigkeit der Temperatur im Leckagespalt zwischen der Rotorkomponente und der Statorkomponente seine Form derart ändert, dass in jedem Betriebszustand nur ein minimaler vom Strömungsmedium durchströmbarer Restspalt bestehen bleibt. Das Dichtelement weist dafür einen Biegekörper auf, der sich in Abhängigkeit von seiner Temperatur mehr oder weniger krümmt. Dabei ist der Biegekörper an einem Ende mit der Rotorkomponente und/oder der Statorkomponente verbunden. Ein auf diese Weise geschaffenes System gleicht auch große Veränderungen der Spaltgeometrie aus.

Zur Sicherstellung einer besonders hohen Dichtigkeit ist in besonders vorteilhafter Ausgestaltung der Biegekörper mit einem vorzugsweise an dem freien Ende des Biegekörpers angebrachten zusätzlichen Dichtelement versehen. Bei einem derartig ausgeführten Dichtungssystem ist der Biegekörper als Aktor wirksam, wodurch das zusätzlich angebrachte Dichtelement hinsichtlich einer effektiven Abdichtung des Leckagespaltes positioniert werden kann. Somit können Dichtungskonzepte verwirklicht werden, welche bei relativ großen Leckagespalten bisher überhaupt nicht oder nur unbefriedigend funktioniert haben. Denkbar ist auch ein solches Dichtungssystem mit einer Hebelvorrichtung, welche zwischen den zusätzlich angebrachten Dichtelement und den als Aktor wirksamen Biegekörper geschaltet ist. Insbesondere ist damit beispielsweise ein größerer Stellweg erreichbar, wodurch zu geringe Auslenkungen des Biegekörpers kompensiert werden.

Der für die Verfügbarkeit und Betriebssicherheit der Strömungsmaschine erforderliche Spalt zwischen der Rotorkomponente und der Statorkomponente im stationären Zustand der Strömungsmaschine und während deren Anfahrvorgangs wird dadurch eingestellt, dass der Biegekörper bei Stillstand der Strömungsmaschine vorzugsweise mehr gekrümmt ist als im Nennlastbetrieb. Damit kann ein ausreichend großes "Kaltspiel" zwischen dem der Rotorkomponente und der Statorkomponente vorgehalten werden. Das im Nennlastbetrieb nicht mehr benötigte "Kaltspiel" wird durch einen in diesem Betriebszustand der Strömungsmaschine weniger gebogenen Biegekörper minimiert.

Der Biegekörper des Dichtelementes ist vorzugsweise aus einem Bimetall gebildet, welches aus zwei miteinander form- oder stoffschlüssig verbundenen Metallschichten besteht. Aufgrund der ungleichen Wärmeausdehnungskoeffizienten der miteinander verbundenen Metalle dehnen diese sich bei Erhöhung der Umgebungstemperatur, in diesem Fall bei einer Erhöhung der Temperatur im Leckagespalt, unterschiedlich stark aus. Infolge dessen verbiegt sich der Biegekörper entsprechend seiner Temperatur. Umgekehrt nimmt der Grad der Verbiegung des Biegekörpers wieder ab, wenn sich die Umgebungstemperatur und damit auch das Bimetall wieder abkühlt. Das Dichtelement passt sich damit kontinuierlich der Temperatur des Arbeitsmediums und der des Dichtelements umgebenen Struktur an.

In alternativer oder zusätzlicher vorteilhafter Weiterbildung kann der Biegekörper auch aus einem Memorymetall gebildet sein, welches auch als Formgedächtnislegierung bekannt ist. Dieses Metall ist gekennzeichnet durch die Eigenschaft der "Gestalterinnerung", die entweder thermisch oder mechanisch ausgelöst werden kann. Selbst nach einer starken Deformation ist dieses Material in der Lage, eine zuvor "eingeprägte" Gestalt wieder anzunehmen. Im Gegensatz zum Bimetall tritt die Formänderung ab einer bestimmten, vom Material abhängigen Temperatur relativ sprunghaft auf. Der Zeitpunkt dieser Formänderung eines derart gebildeten Biegekörpers kann durch die Auswahl geeigneter Legierungen eingestellt werden. Damit ist wie auch beim Einsatz eines Bimetalls eine der Spaltgröße angepasste Form des Biegekörpers möglich.

Die Formänderung des Memorymetalls unterliegt dabei vorteilhafterweise einem Zweiweg-Memory-Effekt. Damit wird erreicht, dass eine Formänderung sowohl bei einer Temperaturerhöhung als auch bei einer Abkühlung des Biegekörpers, ohne dass eine externe Last erforderlich ist, eintritt, wodurch bei einem aus einem derartigen Material gebildeten Biegekörper die Rückstellung somit nicht manuell erfolgen muss. Die Formänderung zwischen zwei unterschiedlichen Gestalten ist also ohne erneute mechanisch ausgelöste Gestaltänderung vielfach wiederholbar (intrinsischer Zwei-Wege-Effekt).

In weiterer zweckmäßiger Ausgestaltung ist der Biegekörper mit von ihm abstehenden Borstenhaaren versehen. Durch diese Kombination ist eine besonders effektive Abdichtung des Leckagespalts zwischen der Rotorkomponente und der Statorkomponente möglich. Gegenüber bereits bekannten Borstendichtungen können die Borsten eher kurz gehalten werden, da bei einem Betriebszustand mit maximaler Größe des Leckagespaltes die Borsten aufgrund des als Aktor wirksamen Biegekörpers diesen nicht vollständig ausfüllen müssen. Eine Abdichtung ohne eine solche temperaturgesteuerte dynamische Anpassung an die Spaltänderungen durch den Biegekörper hätte zur Folge, dass insbesondere während des Anfahrvorgangs der Strömungsmaschine die Borsten aufgrund ihrer Länge stark beansprucht werden und dadurch eine hohe Knickgefahr besteht.

Das beschriebene Dichtungssystem kann auf vorteilhafte Weise an verschiedenen Stellen zwischen feststehenden und bewegten, insbesondere zwischen feststehenden und rotierenden Teilen oder Baugruppen, zum Einsatz kommen. Besonders bevorzugt ist jedoch der Einsatz der temperatursensitiven Dichtelemente zum Abdichten des zwischen dem Rotor und dem Stator auftretenden Leckagespalts einer thermischen Strömungsmaschine, insbesondere einer Gas- oder Dampfturbine.

Die mit der Erfindung erzielten Vorteile bestehen insbesondere darin, dass durch den Einsatz von Dichtelementen, welche eine sich der Umgebungstemperatur anpassende Form aufweisen, der Leckagespalt dynamisch abgedichtet werden kann. Dadurch, dass die Größe des Leckagespalts wesentlich auf einer unterschiedlichen thermischen Ausdehnung von Rotor und Stator einer thermischen Strömungsmaschine beruht, ist ein derartiges Dichtungssystem zur Spaltabdichtung besonders geeignet. Insbesondere in der Ausführung einer klassischen Labyrinthdichtung entsteht somit ein außerordentlich verschleißarmes System, das zudem eine hervorragende Dichtwirkung aufweist.

Ein Ausführungsbeispiel der Erfindung wird anhand einer Zeichnung näher erläutert. Darin zeigen:
- FIG 1: eine schematische Darstellung einer Dampfturbine im Längsschnitt, und
- FIG 2 bis 8: jeweils eine Dichtungsanordnung mit einer Anzahl von Dichtelementen.

Gleiche Teile sind in allen Figuren mit denselben Bezugszeichen versehen.

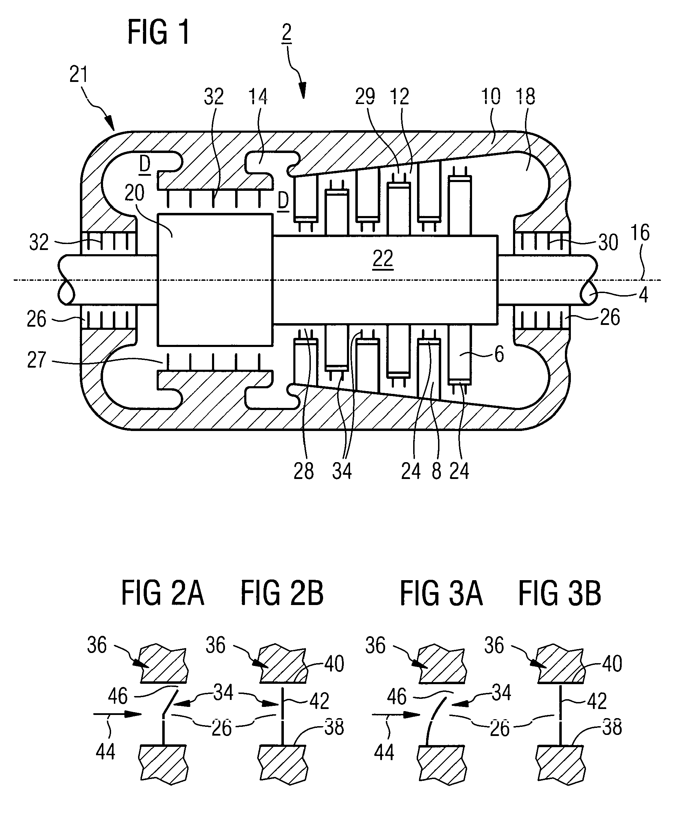

FIG 1 zeigt einen Längsschnitt durch eine Dampfturbine 2 als ein Beispiel für eine thermische Strömungsmaschine. Die Dampfturbine 2 weist eine Anzahl von mit der Turbinenwelle 4 verbundenen, rotierbaren Laufschaufeln 6 auf. Die Laufschaufeln 6 sind jeweils kranzförmig an der Turbinenwelle 4 angeordnet und bilden somit eine Anzahl von Laufschaufelkränzen oder Laufschaufelreihen. Weiterhin umfasst die Dampfturbine 2 eine Anzahl von feststehenden Leitschaufeln 8, die ebenfalls kranzförmig unter Bildung von Leitschaufelkränzen oder Leitschaufelreihen an einem Turbinengehäuse 10 der Dampfturbine 2 befestigt sind. Die Leitschaufeln 8 können abweichend von der Darstellung in FIG 1 auch an einem innerhalb des äußeren Turbinengehäuses 10 angeordneten Innengehäuse oder an Leitschaufelträgern befestigt sein.

Der von der Turbinenwelle 4 und dem Turbinengehäuse 10 begrenzte Strömungskanal 12, der auch als Expansionsstrecke bezeichnet wird, wird eingangsseitig über eine ringförmige Einströmöffnung 14 mit unter hohem Druck und unter hoher Temperatur stehendem Dampf D beaufschlagt. Der Dampf D durchströmt den Strömungskanal 12 in einer parallel zur Mittelachse 16 der Dampfturbine 2 verlaufenden Hauptströmungsrichtung, wobei er sich arbeitsleistend entspannt und dabei durch Impulsübertragung auf die Laufschaufeln 6 die Turbinenwelle 4 antreibt.

Die Leitschaufeln 8 dienen zur Strömungsführung des als Arbeitsmedium vorgesehenen Dampfes D zwischen jeweils zwei in Strömungsrichtung gesehen aufeinander folgenden Laufschaufelreihen. Ein aufeinander folgendes Paar von einem Kranz von Leitschaufeln 8 oder einer Leitschaufelreihe und von einem Kranz von Laufschaufeln 6 oder einer Laufschaufelreihe wird auch als Turbinenstufe bezeichnet. Der nach dem Durchströmen der Expansionsstrecke entspannte Dampf D sammelt sich in einem endseitig in der Dampfturbine 2 angeordneten Austrittsbereich 18 und wird über eine hier nicht näher dargestellte Leitung aus dem Turbinengehäuse 10 abgeführt.

Das Druckgefälle an den Schaufeln bewirkt einen Schub in Durchströmrichtung. Dieser Schub wird durch einen Schubausgleichskolben 20, der auf der dem Strömungskanal 12 abgewandten Seite ebenfalls mit unter Druck stehendem Dampf D beaufschlagt wird, bis auf einen definierten Restschub kompensiert. Die Gesamtheit der feststehenden Turbinenteile, also das Turbinengehäuse 10 zusammen mit den Leitschaufeln 8, wird auch als Stator 21 bezeichnet. Die rotierenden Teile, also die Turbinenwelle 4 mit den Laufschaufeln 6, werden in ihrer Gesamtheit auch als Turbinenläufer oder Rotor 22 bezeichnet.

Zur Realisierung eines hohen Wirkungsgrades sollten die an verschiedenen Stellen zwischen dem Rotor 22 und dem Stator 21 der Dampfturbine 2 auftretenden Leckageströme des Dampfes D minimiert werden. Derartige Leckageströme treten beispielsweise innerhalb der ringförmigen Leckagespalte 26 zwischen der Turbinenwelle 4 und dem jeweils in axialer Richtung endseitig positionierten Randabschnitt des Turbinengehäuses 10 auf, wobei Dampf D in die Umgebung entweicht. Ebenso unerwünscht ist ein Überströmen des Dampfes D innerhalb des zwischen dem Schubausgleichskolben 20 und dem Turbinengehäuse 10 liegenden Leckagespaltes 27. Schließlich existieren zudem Leckagespalte 28, 29 zwischen einem den Laufschaufeln 6 einer Laufschaufelreihe zugeordneten Laufschaufeldeckband 24 und dem umliegenden Turbinengehäuse 10 sowie zwischen einem den Leitschaufeln 8 einer Leitschaufelreihe zugeordneten Leitschaufeldeckband 24 und dem ihm gegenüberliegenden Abschnitt des Rotors 22.

Um die Leckageverluste möglichst gering zu halten, weist die Dampfturbine 2 eine Anzahl von Wellendichtungen 30 zur Abdichtung der Leckagespalte 26 zwischen der Turbinenwelle 4 und dem Turbinengehäuse 10 sowie eine Schubausgleichskolben-Dichtung 32 zur Abdichtung des Leckagespaltes 27 zwischen dem Schubausgleichskolben 20 und dem Turbinengehäuse 10 auf. Ferner sind Dichtelemente 34 zur Abdichtung der Leckagespalte 28, 30 zwischen dem jeweiligen Leitschaufeldeckband und dem Rotor 22 bzw. zwischen dem jeweiligen Laufschaufeldeckband und dem Turbinengehäuse 10 vorgesehen. Die Dichtungen 30, 32, 34 zwischen dem Rotor 22 und dem Stator 21 der Dampfturbine 2 sind in FIG 1 nur schematisch angedeutet und werden im Folgenden näher erläutert.

Die im Detail dargestellten Dichtungsanordnungen 36 in FIG 2 bis 8 zeigen jeweils ein Dichtungssystem zwischen dem Rotor 22 und dem Stator 21 der Dampfturbine 2, welche eine Wellendichtung 30, eine Schubausgleichskolben-Dichtung 32 oder auch eine Turbinenschaufel-Dichtung 34 sein kann. Die Dichtungsanordnung 36 ist dabei an einem Dichtungsträgerelement 38, 40 einer Turbinenkomponente verankert. Für die folgende Diskussion wird angenommen, dass es sich bei der Turbinenkomponente um eine Rotorkomponente 38 und eine Statorkomponente 40 handelt.

Die in den FIG 2 bis 8 dargestellten, einen Dichtkörper 42 umfassenden Dichtelemente 32 sind mit einem Ende fest mit der Rotorkomponente 38 oder der Statorkomponente 40 der Dampfturbine 2 verbunden, während das freie Ende in den Leckagespalt 26 hineinragt.

Die FIG 2A und 3A zeigen in Strömungsrichtung 44 gebogene Biegekörper 42 bei einer zum Stillstand der Dampfturbine 2 korrespondierenden Umgebungstemperatur. Der zwischen dem freien Ende des Biegekörpers 42 und der Statorkomponente 40 auftretende Restspalt 46 ist notwendig, um die unterschiedliche thermische Ausdehnung zwischen dem Rotor 22 und dem Stator 21 zu kompensieren. Dieser Restspalt 46 sollte für den Anfahrvorgang der Dampfturbine 2 ausreichend groß sein, so dass der Rotor 22, welcher die Betriebstemperatur schneller erreicht als das Turbinengehäuse 10 der Dampfturbine 2, nicht mit dem Turbinengehäuse 10 kollidiert. Durch den Grad der Biegung des Biegekörpers 42 kann der Restspalt 46 entsprechend der betriebsbedingten Spaltänderung zwischen dem Rotor 22 und dem Stator 21 voreingestellt werden.

Nach dem Erreichen der Betriebstemperatur der Dampfturbine im Nennlastbetrieb nimmt der Biegekörper 42 aufgrund der Temperaturerhöhung im Leckagespalt 26 eine wie in den FIG 2B und 3B dargestellte gerade Form an, wodurch eine hohe Dichtwirkung durch den relativ kleinen Restspalt 46 erreicht wird.

Ein aus einem Memorymetall gebildeter Biegekörper 42 ist in den FIG 2A und 2B dargestellt, wobei der Biegekörper mit einem Ende fest mit der Rotorkomponente 38 verbunden ist.
FIG 2A zeigt dabei einen in den Leckagespalt 26 hineinragenden, an einer Stelle des Memorymetalls stark gebogenen Biegekörper und FIG 2B einen Biegekörper 42 mit einer geraden Form, der mit seinem freien Ende in den Leckagespalt 26 hineinragt.

Um bei einer Änderung der Betriebsweise der Dampfturbine 2 eine dynamische Anpassung des Biegekörpers 42 an den Leckagespalt 26 zu gewährleisten, unterliegt der aus einem Memorymetall gebildete Biegekörper 42 einem Zweiweg-Effekt. Das heißt, eine definierte Formänderung des Biegekörpers 42 tritt sowohl bei dessen Erwärmung als auch bei dessen Abkühlung auf.

Analog zu den FIG 2A und 2B ist in den FIG 3A und 3B ein mit einem Ende stoff- und/oder formschlüssig mit dem Rotor 38 verbundener Biegekörper dargestellt. Hingegen ist dieser als Dichtelement 34 wirksame Biegekörper 42 aus einem Bimetall gebildet, welcher bei einer Temperaturänderung des Biegekörpers 42 seine Form im Unterschied zu einem aus einem Memorymetall gebildeten Biegekörper kontinuierlich ändert.

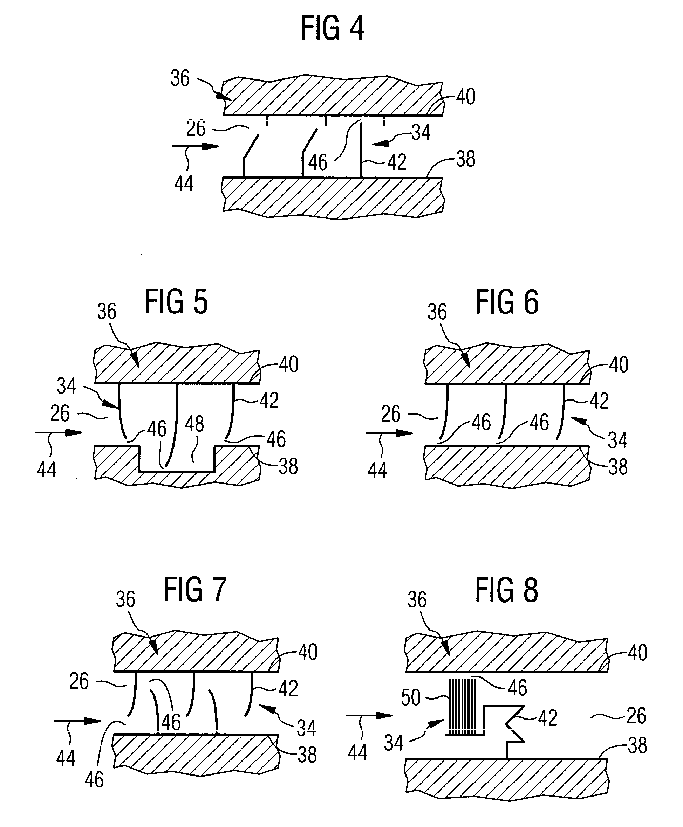

Die in FIG 4 angedeutete Leckagespaltabdichtung ist als Labyrinthdichtung ausgeführt und umfasst drei in Strömungsrichtung 44 des Arbeitsmediums der Dampfturbine 2 hintereinander angeordnete aus einem Memorymetall gebildete Biegekörper 42, wobei der Grad der Biegung der Dichtelemente 34 entgegen der Strömungsrichtung 44 gesehen zunimmt. Dabei sind die Dichtelemente 34 entsprechend einem Temperaturverlauf im Leckagespalt 26 oder entsprechend unterschiedlich eingestellter Formänderungstemperatur ungleich stark gebogen. Der in dieser Abbildung dargestellte Temperaturverlauf entspricht einer kontinuierlichen Temperaturerhöhung in Strömungsrichtung 44 des Arbeitsmediums der Dampfturbine 2.

Eine Dichtungsanordnung 36 mit drei in Strömungsrichtung 44 hintereinander an der Statorkomponente 40 angeordneten Dichtelementen 34 ist in FIG 5 dargestellt. Jeder der Biegekörper 42 ist aus einem Bimetall gebildet, wobei der in Strömungsrichtung gesehen mittig angeordnete Biegekörper 42 mit seinem freien Ende in eine, durch eine in der Rotorkomponente 38 eingebrachte und im Umfang des Rotors verlaufende Ausnehmung 48 hineinragt.

FIG 6 zeigt drei an der Statorkomponente 40 in Strömungsrichtung 44 gesehen hintereinander angeordnet als Dichtelemente 34 wirksame Biegekörper 42, wobei jeder Biegekörper 42 entgegen der Strömungsrichtung 44 gebogen ist.

Eine Dichtungsanordnung 36 in der Ausführung einer Labyrinthdichtung, bei der die als Dichtelemente 34 wirksamen Biegekörper 42 in Strömungsrichtung 44 gesehen hintereinander alternierend an der Statorkomponente 40 und an der Rotorkomponente 38 angeordnet sind, ist in FIG 7 dargestellt. Die Biegekörper weisen dabei eine entgegen der Strömungsrichtung 44 gebogene Form auf.

FIG 8 zeigt einen mehrfach gebogenen Biegekörper 42, bestehend aus einem Memorymetall, beispielsweise eine NiTi-, CuZn- oder FeNiAl-Legierung, an dessen freien Ende zur Verbesserung der Dichtwirkung Borsten 50 angebracht sind. Durch eine derartige Geometrie des Biegekörpers 42 und einer damit vergleichsweise großen Abmessung des Bimetalls, erhöht sich die thermodynamische Effizienz wesentlich gegenüber den in den vorangegangenen Figuren dargestellten Dichtelementen 34. Eine weiterer wesentlicher Vorteil dieser Dichtungsanordnung ist die Kombination einer Borstendichtung mit dem erfindungsgemäßen Biegekörper 42, welcher als Aktor wirksam ist. Dabei ist der Biegekörper 42 an einem Ende mit dem Rotor 38 form- und/oder kraftschlüssig verbunden. Von dem freien Ende des Biegekörpers 42 stehen in den Leckagespalt hineinragende Borsten 50 ab. Die Steuerung, d. h. das öffnen und Schließen der Dichtung, steht bei einer derartigen Dichtungsanordnung in Wechselwirkung mit der auftretende Temperaturdifferenz im Leckagespalt. Somit ist der Leckagestrom von der jeweiligen Dichtstellung abhängig. Das auf diese Weise geschaffene Dichtungssystem weist auch bei großen Änderungen der Spaltbreite 26 ausgesprochen gute Dichteigenschaften auf.

Im Ausführungsbeispiel ist die Funktionsweise des jeweiligen Dichtelements anhand einer Dampfturbine erläutert. Selbstverständlich können derartige Dichtelemente aber auch in anderen geeigneten Systemen oder thermischen Strömungsmaschinen, vorzugsweise in stationären Gasturbinen, zum Einsatz kommen.

## Patentansprüche

1. Dichtelement (34) zur Abdichtung eines von einem Strömungsmedium durchströmbaren Leckagespalts (26, 27, 28, 29) zwischen einem Rotor (22) und einem Stator (21) einer thermischen Strömungsmaschine,
welches einen Biegekörper (42) aufweist, der in Abhängigkeit seiner Temperatur seine Form verändert.

2. Dichtelement (34) nach Anspruch 1,
dessen Biegekörper (42) als Aktor für ein von ihm verschiedenes und hinsichtlich seiner Dichtwirkung einstellbares Dichtelement (34) wirksam ist.

3. Dichtelement (34) nach Anspruch 1,
dessen Biegekörper (42) bei einer zum Stillstand der Strömungsmaschine korrespondierenden Temperatur des Biegekörpers (42) stärker gebogen oder geknickt ist als bei einer zum Nennlastbetrieb der zugehörigen Strömungsmaschine korrespondierenden Temperatur des Biegekörpers (42).

4. Dichtelement (34) nach einem der Ansprüche 1 bis 3, dessen Biegekörper (42) aus einem Bimetall gebildet ist.

5. Dichtelement (34) nach einem der Ansprüche 1 bis 4, dessen Biegekörper (42) aus einem Memorymetall gebildet ist.

6. Dichtelement (34) nach Anspruch 5,
wobei die Formänderung des Memorymetalls einem Zweiweg-Memory-Effekt unterliegt.

7. Dichtelement (34) nach einem der Ansprüche 1 bis 6,
wobei der Biegekörper (42) mit von ihm abstehenden Bürstenhaaren (50) versehen ist.

8. Thermische Strömungsmaschine,
insbesondere Gasturbine oder Dampfturbine (2),
mit einem Rotor (22) und mit einem Stator (21),
bei der ein zwischen dem Rotor (22) und dem Stator (21) gelegener, von einem Strömungsmedium durchströmbarer Leckagespalt (26, 27, 28, 29) mit mindestens einem Dichtelement (34) nach einem der Ansprüche 1 bis 7 abgedichtet ist.
